# EUROPÄISCHE PATENTSCHRIFT

(11) **EP 3 310 639 B1**
(45) Veröffentlichungstag und Bekanntmachung des Hinweises auf die Patenterteilung: **13.03.2019**
(21) Anmeldenummer: 16728335.7
(22) Anmeldetag: 13.06.2016
(51) Int. Cl.: B62D 1/184

(54) **LENKSÄULE MIT ELEKTRO-MECHANISCHER FIXIERVORRICHTUNG**
STEERING COLUMN HAVING AN ELECTRO-MECHANICAL FIXING DEVICE
COLONNE DE DIRECTION MUNI D'UN DISPOSITIF DE FIXATION ÉLECTROMÉCANIQUE

(30) Priorität: 19.06.2015 DE 102015007784
(43) Veröffentlichungstag der Anmeldung: 25.04.2018
(73) Patentinhaber: ThyssenKrupp Presta AG, 9492 Eschen (LI); thyssenkrupp AG, 45143 Essen (DE)
(72) Erfinder: BLÄTTLER, Simon, 9472 Grabs (CH); SPECHT, Jean-Pierre, 9469 Haag (CH)
(74) Vertreter: thyssenkrupp Intellectual Property GmbH
(86) Internationale Anmeldenummer: PCT/EP2016/063434
(87) Internationale Veröffentlichungsnummer: WO 2016/202715

(56) Entgegenhaltungen:
- DE-T2- 60 305 795

## Beschreibung

Die vorliegende Erfindung betrifft eine verstellbare Lenksäule eines Kraftfahrzeuges mit den Merkmalen des Oberbegriffs des Anspruchs 1. Verstellbare Lenksäulen dienen zur Anpassung der Position des Lenkrades an die Sitzposition des Fahrers und sind in unterschiedlichen Ausführungsformen bekannt. In vielen Kraftfahrzeugen kann die vertikale Neigung der Lenksäule und/oder der Abstand des Lenkrades zum Fahrer eingestellt werden. Nach dem Einstellen der Lenksäule wird diese in der gewünschten Position fixiert. Hierzu ist eine Vielzahl von Klemmmechanismen für in axialer und/oder vertikaler Richtung verstellbare Lenksäulen von Kraftfahrzeugen bekannt. Da zum Verriegeln des Klemmmechanismus trotz des Einsatzes von Hebelelementen eine hohe Kraft benötigt wird, besteht der Bedarf nach einem elektrisch betätigbaren Lenksäulenmechanismus.

Die Offenlegungsschrift FR 2 687 628 A1 offenbart einen Klemmmechanismus, der mittels eines elektrischen Betätigungselements aktiviert werden kann. Die Lenksäule ist in einer durch den Fahrer gewählten bestimmten Position durch den Klemmmechanismus festgelegt. Ein durch das elektrische Bestätigungselement betätigbares Spannglied hält den Klemmmechanismus in einer Spannstellung. Durch die fahrerseitige Aktivierung des elektrischen Betätigungselements wird das Spannglied von seiner Spannstellung in eine Nichtspannstellung gebracht, so dass der Klemmmechanismus außer Kraft gesetzt wird und damit die Lenksäule relativ zur fahrzeugfesten Anbindung beweglich ist. Der Fahrer drückt beispielsweise einen Taster, der einen elektrischen Motor aktiviert um die Klemmung des Lenkrades aufzuheben. Der Motor treibt das Spannglied an, welches dadurch in Nichtspannstellung gebracht wird.

Aus dem Stand der Technik ist weiterhin die DE 603 05 795 T2 bekannt, welche als nächster Stand der Technik in Bezug auf den unabhängigen Anspruch angesehen wird und die eine elektrische Klemmung für eine Lenksäule offenbart, wobei die Klemmvorrichtung mittels einer Montagestange oder eines Montagebügels an der Lenksäule angebracht ist. Ein Nachteil dieser Lösung ist der aufwändige Aufbau der Klemmvorrichtung und die daraus resultierende eingeschränkte Modularität.

Weiterhin offenbart die DE 699 19 639 T2 einen elektrischen Klemmmechanismus, wobei eine bewegliche Nockenscheibe auf einem Schneckenrad drehfest angebracht ist und eine bezüglich der Rotation unbewegliche Nockenscheibe mittels einer Sitzplatte an dem Gehäuse festgelegt ist. Nachteilig sind dabei die hohe Bauteilanzahl und die damit verbunden Kosten.

Es ist Aufgabe der vorliegenden Erfindung, eine verstellbare Lenksäule mit einer elektro-mechanischen Fixiervorrichtung anzugeben, die einen unkomplizierten und kompakten Aufbau aufweist und dabei kostengünstig ist.

Diese Aufgabe wird von einer Lenksäule mit den Merkmalen des Anspruchs 1 gelöst.

Danach ist eine Lenksäule für ein Kraftfahrzeug vorgesehen, die zumindest in ihrer Längsrichtung oder in ihrer Höhenrichtung verstellbar ist, umfassend ein Mantelrohr, das eine Lenkspindel drehbar lagert, ein Halteteil, das mit der Karosserie des Kraftfahrzeugs verbindbar ist und zwei Seitenwangen aufweist, zwischen denen das Mantelrohr angeordnet ist, und eine elektro-mechanische Fixiervorrichtung, in deren Freigabestellung das Mantelrohr gegenüber dem Halteteil wenigstens in Längsrichtung der Lenksäule verstellbar ist und in deren Fixierstellung die eingestellte Position des Mantelrohrs gegenüber dem Halteteil festgestellt ist, wobei die Fixiervorrichtung einen Spannbolzen, der die Seitenwangen des Halteteils durchsetzt und beim Öffnen und Schließen der Fixiervorrichtung mittels eines in einem Gehäuse angeordneten Elektromotors um seine Achse drehbar ist, und einen Hubmechanismus sowie ein Stützlager umfasst, wobei die Seitenwangen des Halteteils sowie das Mantelrohr zwischen dem Hubmechanismus und dem Stützlager angeordnet sind, wobei der Hubmechanismus zwei Hubscheiben aufweist, wobei eine erste Hubscheibe drehfest mit dem Spannbolzen verbunden ist und eine zweite Hubscheibe auf dem Spannbolzen axial verschieblich in dem Gehäuse geführt ist, und wobei das Gehäuse schwimmend auf der zweiten Hubscheibe gelagert ist. Dieser Aufbau ist besonders kompakt und kostengünstig, da zur Anbindung der Fixiervorrichtung an die Lenksäule auf zusätzliche Befestigungspunkte verzichtet werden kann.

Unter "schwimmend" wird verstanden, dass sich das Gehäuse gegen eine Rotation um die Längsachse des Spannbolzens abstützt, sich jedoch gegenüber der zweiten Hubscheibe in Richtung der Längsachse des Spannbolzens verschieben lässt ohne sich dabei zu verkanten.

In einer bevorzugten Weiterbildung ist der Hubmechanismus als ein Nockenmechanismus ausgebildet, wobei die erste Hubscheibe als eine erste Nockenscheibe und die zweite Hubscheibe als eine zweite Nockenscheibe ausgebildet ist. Durch eine relativen Verdrehung der ersten und der zweiten Nockenscheibe wird ein Hub erzeugt. Solche Nockengetriebe sind aus dem Stand der Technik hinreichend bekannt. Aus diesem Grund wird auf eine genaue Beschreibung dieses Nockenmechanismus an dieser Stelle verzichtet.

In einer bevorzugten Weiterbildung ist zwischen der ersten Nockenscheibe und der zweiten Nockenscheibe zumindest ein Wälzkörper angeordnet. Bevorzugt ist dieser Wälzkörper als Rolle, Nadel oder Kugel ausgebildet. Dieser Wälzkörper rollt zwischen den Nockenscheiben ab, so dass die Reibung während des Betriebs reduziert werden kann.

In einer weiteren bevorzugten Weiterbildung sind zwischen der ersten Hubscheibe und der zweiten Hubscheibe zumindest zwei Stifte angeordnet, wobei diese durch das Verdrehen der ersten Hubscheibe gegenüber der zweiten Hubscheibe ausgehend von der Freigabestellung in die Fixierstellung aus einer geneigten Stellung in eine gestreckte Stellung überführt werden. Solche sogenannten Kippstift-Hubmechanismen sind aus dem Stand der Technik bekannt. Durch das Verkippen der Stifte wird ein Hub generiert. Die Stifte umfassen bevorzugt zwei abgerundete Köpfe, wobei sich der erste Kopf in einer ersten Tasche der ersten Hubscheibe aufgenommen ist und der zweite Kopf in einer zweiten Tasche der zweiten Hubscheibe aufgenommen ist.

In einer bevorzugten Ausführungsform ist eine Führungsklammer vorgesehen, die zwischen dem Halteteil und dem Mantelrohr angeordnet ist und die das Mantelrohr in der Längsrichtung führt. Dabei ist es vorteilhaft, wenn die Führungsklammer um eine Schwenkachse in dem Halteteil schwenkbar gelagert ist und somit eine Höhenverstellung der Lenksäule ermöglicht.

Vorzugsweise ist eine Rotorwelle des Elektromotors mit einer Schnecke drehfest verbunden, wobei die Schnecke mit einem Schneckenrad kämmt, das drehfest mit der ersten Hubscheibe verbunden ist.

Vorzugsweise weist das Schneckenrad eine Grundfläche eines Kreissektors auf. Die Grundfläche des Schneckenrads ist orthogonal zu einer Achse, um die das Schneckenrad zumindest teilweise rotiert, angeordnet. Es ist nicht notwendig, das Schneckenrad als vollständiges Schneckenrad auszubilden, da dieses keine volle Rotation vollführt, sondern lediglich einen Verdrehung um einen Winkel kleiner 360°, bevorzugt kleiner 90° und ganz besonders bevorzugt kleiner 55°.

Bevorzugt wirken die beiden Hubscheiben als Hubgetriebe mit dem Stützlager zur Bereitstellung eines Klemmhubs für die Fixierstellung der Fixiervorrichtung zusammen.

Weiterhin ist es bevorzugt, dass zusätzlich zu dem Elektromotor auch das Schneckengetriebe in dem Gehäuse untergebracht ist und das Gehäuse an einer Seitenwange des Halteteils befestigt ist. Das Gehäuse kann sich so mit der Seitenwange mitbewegen.

In einer vorteilhaften Ausführungsform ist zwischen dem Gehäuse und dem Schneckenrad eine Zugfeder angeordnet, die als Schließhilfe für die Fixiervorrichtung vorgesehen ist und die bei der Überführung der Fixiervorrichtung in die Freigabestellung durch Drehung des Schneckenrades vorspannbar ist. Die Zugfeder unterstützt den Elektromotor beim Übergang in die Fixierstellung, wodurch ein schwächerer und kostengünstiger Elektromotor verwendet werden kann, ohne die Schließzeit zu verlängern.

In einer weiteren Ausführungsform kann vorgesehen sein, dass mindestens ein zwischen den Seitenwangen des Halteteils angeordneter und durch die Drehung des Spannbolzens beim Öffnen und Schließen der Fixiervorrichtung verstellbarer Feststellhaken vorhanden ist, welcher in der Fixierstellung in ein Gegenfeststellteil eingreift und welcher in der Freigabestellung vom Gegenfeststellteil distanziert ist, wobei das Gegenfeststellteil an einer parallel zur Achse des Spannbolzens liegenden Außenwand des Mantelrohrs angeordnet ist oder von dieser gebildet ist. Diese Feststelleinrichtung bringt eine zusätzliche Haltekraft gegen eine Längsverstellung der Lenksäule im Falle eines Unfalls des Fahrzeugs auf.

Unter der parallel zur Achse des Spannbolzens liegenden Außenwand des Mantelrohrs wird auch eine kreiszylindrische Außenwand des Mantelrohrs verstanden, da dieses Mantelrohr eine Tangente aufweist, die parallel zur Achse des Spannbolzens ausgerichtet ist.

Zudem ist es bevorzugt, eine Fixierscheibe zwischen der zweiten Hubscheibe und der dazu nahen Seitenwange des Halteteils anzuordnen, die mit der zweiten Hubscheibe im Wesentlichen drehfest verbunden ist und die in der Fixierstellung der Fixiervorrichtung im Zusammenspiel mit der Seitenwange des Halteteils eine Verschiebesicherung in Richtung der Höhenverstellung bildet.

Unter im Wesentlichen drehfest verbunden ist zu verstehen, dass die Fixierscheibe und die zweite Hubscheibe unter geringem Spiel (weniger als ±10°) miteinander verbunden sind.

Bevorzugt weist die zweite Hubscheibe einen kreisrunden Grundkörper mit zwei radial abstehenden Ansätzen aufweist, wobei diese Ansätze im Zusammenspiel mit einer korrespondieren Ausnehmung des Gehäuses die axiale Führung der zweiten Nockenscheibe und die schwimmende Lagerung des Gehäuses bilden.

Bevorzugt können die radial abstehenden Ansätze ein Schwalbenschwanzprofil aufweisen, wobei diese in der korrespondieren Ausnehmung des Gehäuses drehfest, jedoch verschiebbar aufgenommen sind. Durch das Schwalbenschwanzprofil kann eine gute Abstützung und leichtgängige Verschiebung im Gehäuse realisiert werden.

Bevorzugte Ausführungsformen der Erfindung werden nachfolgend anhand der Zeichnungen näher erläutert. Gleichartige oder gleichwirkende Bauteile werden in allen Figuren mit denselben Bezugszeichen bezeichnet. Es zeigen:
- Fig. 1:: eine räumliche Darstellung einer Lenksäule mit elektromechanischer Fixiervorrichtung in Fixierstellung,
- Fig. 2:: eine Explosionszeichnung der Fixiervorrichtung ohne Gehäusedeckel,
- Fig. 3:: eine perspektive Detailansicht der Fixiervorrichtung,
- Fig. 4:: eine räumliche Darstellung der Fixiervorrichtung,
- Fig. 5:: einen Längsschnitt durch die Fixiervorrichtung,
- Fig. 6:: eine seitliche Detailansicht der Fixiervorrichtung in Fixierstellung,
- Fig. 7:: eine seitliche Detailansicht der Fixiervorrichtung in Freigabestellung,
- Fig. 8:: einen Längsschnitt durch die Lenksäule im fixierten Zustand mit einem Hubmechanismus in einer ersten Ausführungsform,
- Fig. 9:: einen Längsschnitt durch die Lenksäule im freigegebenen Zustand mit dem Hubmechanismus in der ersten Ausführungsform,
- Fig. 10:: eine räumliche Darstellung der Lenksäule von unten mit einem Feststellhaken in Fixierstellung,
- Fig. 11:: eine räumliche Darstellung der Lenksäule aus Fig. 10 mit dem Feststellhaken in Freigabestellung,
- Fig. 12:: einen Längsschnitt durch die Lenksäule im fixierten Zustand mit einem Hubmechanismus in einer zweiten Ausführungsform,
- Fig. 13:: einen Längsschnitt durch die Lenksäule im freigegebenen Zustand mit dem Hubmechanismus in der zweiten Ausführungsform,
- Fig. 14:: einen Längsschnitt durch die Lenksäule im fixierten Zustand mit einem Hubmechanismus in einer dritten Ausführungsform, sowie
- Fig. 15:: einen Längsschnitt durch die Lenksäule im freigegebenen Zustand mit dem Hubmechanismus in der dritten Ausführungsform.

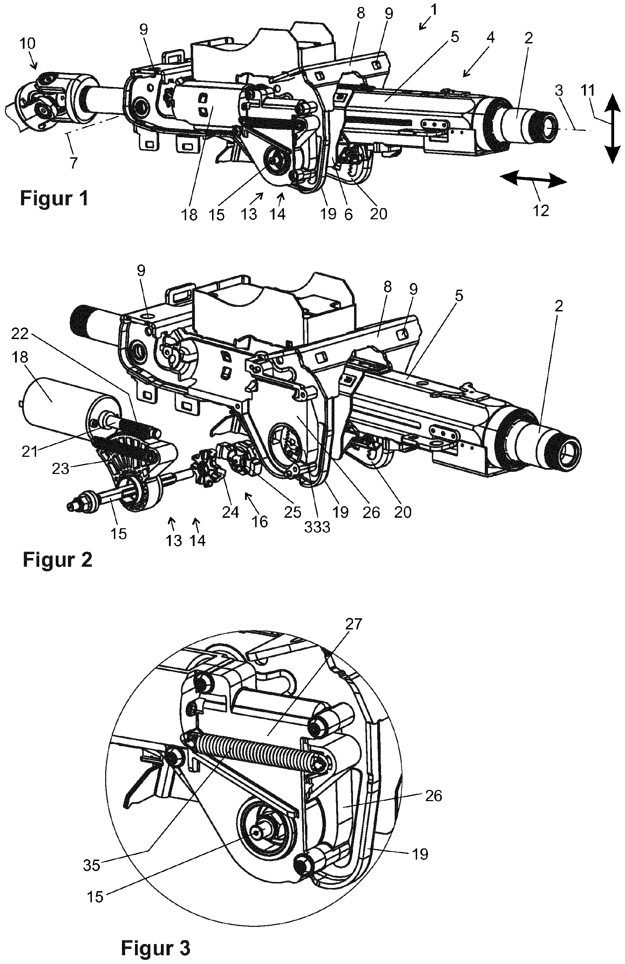

Inder Figur 1 ist eine Lenksäule 1 veranschaulicht, die eine Lenkspindel 2 umfasst, die um ihre Drehachse 3 drehbar in einer Lenkspindellagereinheit 4 mit einem Mantelrohr 5 gelagert ist. Das Mantelrohr 5 ist in einer Führungsklammer 6 entlang der Längsachse der Lenkspindel 2 verschiebbar geführt. Die Führungsklammer 6 ist um eine Schwenkachse 7 in einer Konsole oder allgemein einem Halteteil 8 schwenkbar gelagert. Das Halteteil 8 kann in Befestigungspunkten 9 an der nicht dargestellten Karosserie eines Kraftfahrzeuges befestigt werden. Die von einem Fahrer über ein (nicht dargestelltes) Lenkrad in die Lenkspindel 2 eingebrachte Drehbewegung wird über ein Kardangelenk 10 und weitere Lenkwellenteile in das nicht dargestellte Lenkgetriebe eingebracht. Zur Erhöhung des Komforts des Fahrers kann die Lenksäule 1 in ihrer Höhe in eine erste Verstellrichtung, auch als Höhenrichtung 11 bezeichnet, und in ihrer Länge in eine zweite Verstellrichtung, auch als Längsrichtung 12 bezeichnet, verstellt werden. Hierzu ist eine Fixiervorrichtung 13 vorgesehen, die einen Spannapparat 14 umfasst.

Der Spannapparat 14 weist einen Spannbolzen 15, einen Hubmechanismus 16, ein Stützlager 17 und einen Elektromotor 18 auf. Durch Verdrehung des Spannbolzens 15 werden in dieser Ausführungsform zwei Nocken des Hubmechanismus 16 gegeneinander verdreht und die Seitenwangen 19, 20 des Halteteils 8 zusammengezogen, wodurch eine reibschlüssige Verspannung der Seitenwangen 19, 20 des Halteteils 8 mit den Seitenflächen der Führungsklammer 6 und wiederum mit den Seitenflächen des Mantelrohrs 5 erfolgt.

Der Spannbolzen 15 durchsetzt Langlöcher in den Seitenwangen 19, 20 des Halteteils 8 und Löcher in den Seitenflächen der Führungsklammer 6. Der Nockenmechanismus 16 ist auf dem elektromotornahen Ende des Spannbolzens 15 und das Stützlager 17 auf dem anderen Ende des Spannbolzens 15 angeordnet. Die Seitenwangen 19, 20 sowie die Seitenflächen als auch das Mantelrohr 5 sind zwischen dem Nockenmechanismus 16 und dem Stützlager 17 angeordnet.

Durch Drehen des Spannbolzens 15 kann die Fixiervorrichtung wahlweise in eine Freigabestellung, auch geöffnete Stellung genannt, oder eine Fxierstellung, auch geschlossene Stellung genannt, umgeschaltet werden. In der Freigabestellung kann die Lenkspindel 2, beziehungsweise das daran befestigte Lenkrad (nicht dargestellt in den Figuren) in ihrer Position verstellt werden, insbesondere in der Längsrichtung und der Höhen- oder Neigungsrichtung verschoben werden. In der Fixierstellung der Fixiervorrichtung 13 ist die Lenksäule 1 in ihrer Position fixiert.

In der Figur 2 ist die elektro-mechanische Fixiervorrichtung 13 in einer Explosionsansicht im Detail dargestellt. Sie umfasst den Elektromotor 18, dessen Rotorwelle 21 mit einer Schnecke 22 drehfestverbunden ist. Die Schnecke 22 kämmt mit einem Schneckenrad 23, welches mit einer ersten Nockenscheibe 24 drehfest verbunden ist und mit einer zweiten Nockenscheibe 25 als Hubgetriebe zur Bereitstellung eines Klemmhubs zusammenwirkt. Der Elektromotor 18 und ein aus Schnecke 22 und Schneckenrad 23 bestehendes Getriebe sind in einem Gehäuse 26 angeordnet, welches an der Seitenwange 19 des Halteteils 8 verschwenkbar befestigt ist, und nach außen hin mit einem Gehäusedeckel 27, wie in Figur 3 dargestellt, abgedeckt.

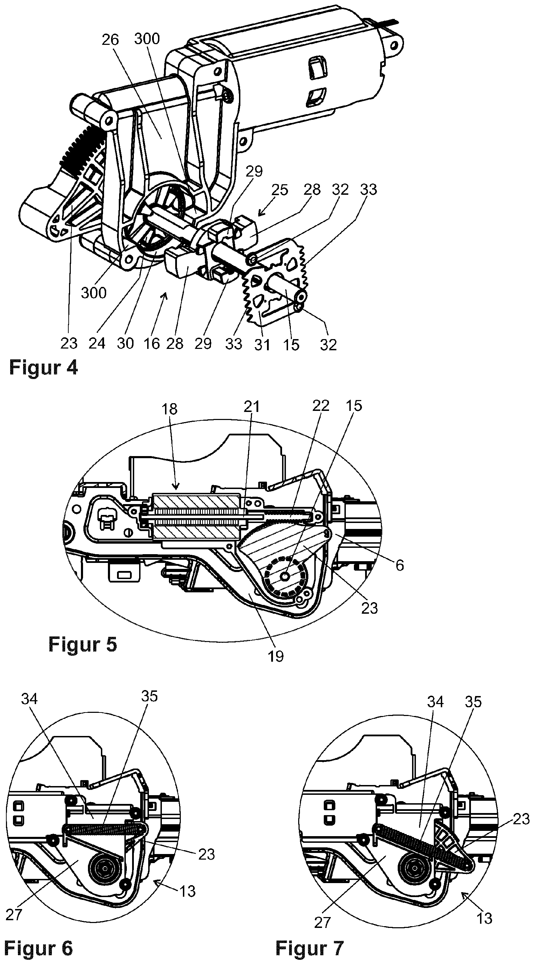

In der Figur 4 ist der Hubmechanismus 16 detailliert dargestellt. Die zweite Nockenscheibe 25 weist zwei aus einer im Wesentlichen runden Grundform radial hervorstehende und sich diametral gegenüberliegende Ansätze 28 auf und zwei in Richtung der Führungsklammer 6 vorstehende Vorsprünge 29. Das Gehäuse 26 weist eine Ausnehmung 30 zur Durchführung des Spannbolzen 15 auf, die so ausgeformt ist, dass sie eine Führung 300 für die zweite Nockenscheibe 25 ausschließlich in Axialrichtung bildet. Eine Verdrehung der zweiten Nockenscheibe 25 mit dem Spannbolzen 15 ist somit ausgeschlossen. Das Gehäuse 26 der elektro-mechanischen Fixiervorrichtung 13 ist schwimmend auf der zweiten Nockenscheibe 25 gelagert und kann sich während der Überführung zwischen der Fixierstellung und der Freigabestellung axial auf dem Spannbolzen 15 und der zweiten Nockenscheibe 25 bewegen.

Zudem ist eine Fixierscheibe 31 vorgesehen, die auf dem Spannbolzen 15 zwischen der zweiten Nockenscheibe 25 und dem Halteteil 8 angeordnet ist und im gespannten Zustand in eine Verzahnung 333 des Halteteils 8 mit zwei gezahnten Seiten 33 eingreift um die Lage des Gehäuses 26 im Halteteil 8 in Richtung der Höhenverstellung zu sichern. Die Fixierscheibe 31 sitzt dazu drehfest auf den Vorsprüngen 29 der zweiten Nockenscheibe 25. Um die Fixierscheibe 31 bei der Überführung in die Freigabestellung außer Eingriff zu bringen, umfasst die Fixierscheibe 31 zwei blattfederartige Schenkel 32.In der Figur 5 ist im Detail dargestellt, wie die Rotorwelle 21 des Elektromotors 18 mit der Schnecke 22 drehfest verbunden ist. Dabei sind die Rotorwelle 18 und die Schnecke 22 senkrecht zum Spannbolzen 15 angeordnet. Die Schnecke 22 kämmt mit dem kreissektorförmigen Schneckenrad 23, welches sich um die Drehachse des Spannbolzens 15 dreht.

Die Figuren 6 und 7 illustrieren eine vorteilhafte Ausführungsform der erfindungsgemäßen Lenksäule 1 mit einer Schließhilfe 34 für die Fixiervorrichtung 13. Eine spiralförmige Zugfeder 35 ist zwischen dem Gehäuse 27 und dem Schneckenrad 23 angeordnet. Bei der Überführung der Fixiervorrichtung in die Freigabestellung wird die Zugfeder 35 durch Drehung des Schneckenrades 23 zusammen mit der Spannachse 15 vorgespannt. Die in der Zugfeder 35 gespeicherte Energie steht zur Überführung der Vorrichtung in die Fixierstellung zur Verfügung und unterstützt somit den Elektromotor 18 beim Schließen der Fixiervorrichtung 13. Dadurch kann ein schwächerer und kostengünstiger Elektromotor 18 verwendet werden, ohne die Schließzeit zu verlängern. Im Inneren der Zugfeder 35 ist ein Schaumstoffkörper 351 angeordnet, der die Schwingungen der Zugfeder dämpft und somit Störgeräusche durch das Schwingen der Zugfeder 35 abmildert.

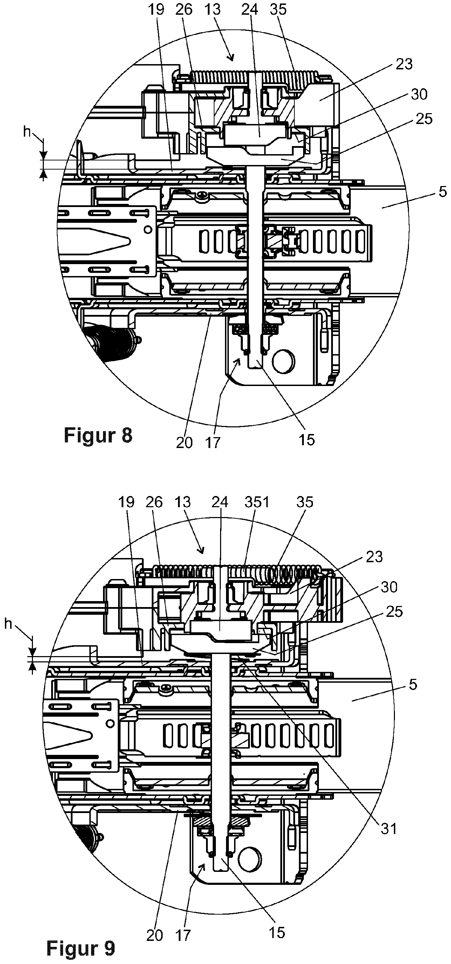

Die Funktionsweise der Fixiervorrichtung 13 mit einem Hubmechanismus 16 in einer ersten Ausführungsform ist in den Figuren 8 und 9 in Form eines Längsschnitts durch die Lenksäule 1 veranschaulicht. Dabei handelt es sich in den Figuren 8 und 9 um eine vereinfachte schematische Darstellung, um die Übersichtlichkeit zu erhöhen. Durch die Drehung des Spannbolzens 15 wird die damit drehfest verbundene erste Nockenscheibe 24 gegenüber der zweiten Nockenscheibe 25 verdreht. Durch das Zusammenspiel der beiden Nockenscheiben 24, 25 verändert sich der Abstand zwischen dem Schneckenrad 23 und dem Mantelrohr 5. In dem Übergang zur Fixierstellung wird der Abstand vergrößert, in dem die beiden Nockenscheiben 24, 25 auseinander gedreht werden und sich somit die Tiefe der beiden Bauteile vergrößert, so dass die zweite Nockenscheibe 25 aus der Ausnehmung 30 des Gehäuses 26 heraus gedrückt wird und sich an der Seitenwange 19 des Halteteils 8 abstützt und dabei das Stützlager 17 gegen die gegenüberliegende Seitenwange 20 des Halteteils 8 zieht. Die Fixierscheibe 31 wird dabei in eine Ausnehmung des Halteteils 8 hineingedrückt. Die Fixiervorrichtung ist nun so verspannt, dass die Seitenwangen 19, 20 des Halteteils 8 zusammengezogen sind, wodurch eine reibschlüssige Verspannung der Seitenwangen 19, 20 des Halteteils 8 mit den Seitenflächen der Führungsklammer 6 und wiederum mit den Seitenflächen des Mantelrohrs 5 erfolgt. Der Abstand h zwischen der Fixiervorrichtung 13 weist einen höheren Wert in der Fixierstellung als in der Freigabestellung auf, da die Seitenwangen 19, 20 zusammengezogen sind.

Bei dem Übergang in die Freigabestellung wird die erste Nockenscheibe 24 gegenüber der zweiten Nockenscheibe 25 verdreht, bis die beiden Bauteile ineinander greifen und sich ihre Tiefe verringert. Dadurch verschiebt sich die zweite Nockenscheibe 25 im Gehäuse 26 axial in Richtung des Schneckenrades 23 und das Stützlager 17 sowie die Fixierscheibe 31 lösen sich mittels der zwei blattfederartige Schenkel 32 von den Seitenwangen 19, 20 des Halteteils 8. Die Verspannung der Fixiervorrichtung 13 ist somit gelöst und die Lenksäule 1 ist zur Verstellung freigegeben.

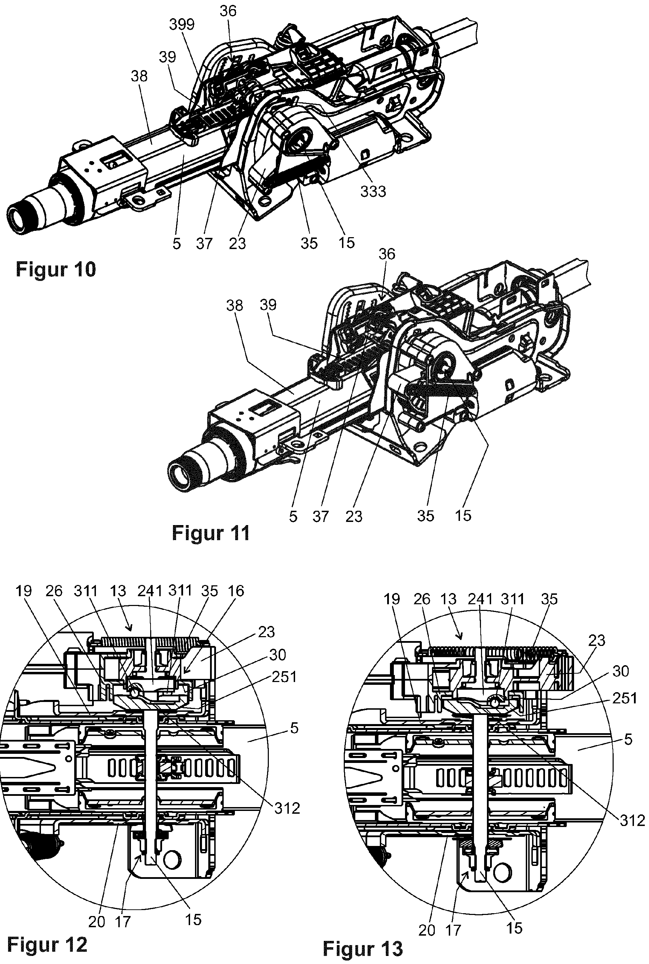

Die Figuren 10 zeigt die Fixierstellung und die Figur 11 die Freigabestellung der Lenksäule 1 in einer perspektivischen Darstellung. In diesen Figuren ist neben der zuvor beschriebenen Fixiervorrichtung 13, eine Feststelleinrichtung 36 besonders gut zu erkennen, durch die eine zusätzliche Haltekraft gegen eine Längsverstellung der Lenksäule 1 im Falle eines Unfalls des Fahrzeugs aufgebracht wird.

Auf dem Spannbolzen 15 ist ein Feststellhaken 37 angeordnet und am Mantelrohr 5 ist an der parallel zur Achse des Spannbolzens 15 liegenden oberen Seitenwand 38 ein Gegenfeststellelement 39 angeordnet. Das Gegenfeststellelement 39 weist eine Mehrzahl von in Längsrichtung der Lenksäule in gleichmäßigen Abständen aufeinanderfolgende Eingriffselementen 399 auf, die zum formschlüssigen Eingriff des Feststellhakens 37 vorgesehen sind. Beim Öffnen und Schließen der Fixiervorrichtung 13 wird der Spannbolzen 15 um seine Achse verdreht und mit ihm der Feststellhaken 37. Im geöffneten Zustand, der Freigabestellung, ist der Feststellhaken 37 vom Gegenfeststellelement 39 distanziert und im geschlossenen Zustand, der Fixierstellung, der Fixiervorrichtung wird der Feststellhaken 37 vorzugsweise federnd in Kontakt mit dem Gegenfeststellteil 39 gebracht. So eine Feststelleinrichtung 36 ist beispielsweise aus der deutschen Patentschrift DE 10 2008 016 742 B4 bekannt.

Die Funktionsweise der Fixiervorrichtung 13 mit einem Hubmechanismus 16 in einer dritten Ausführungsform ist in den Figuren 12 und 13 in Form eines Längsschnitts veranschaulicht. Dabei handelt es sich in den Figuren 12 und 13 um eine vereinfachte schematische Darstellung, um die Übersichtlichkeit zu erhöhen. Die restliche Lenksäule weist eine identische Struktur wie die Lenksäule 1 aus den Figuren 1 bis 11 auf. Durch die Drehung des Spannbolzens 15 wird eine damit drehfest verbundene erste Hubscheibe 241 gegenüber einer zweiten Hubscheibe 251 verdreht, wobei zwischen den Hubscheiben 241, 251 zwei Wälzkörper 311 angeordnet sind, die in Laufbahnen 312, die in der zweiten Hubscheibe 251 ausgebildet sind, abrollen. Weiterhin sind die Wälzkörper 311 in einer Tasche, die in der ersten Hubscheibe 241 ausgebildet ist, aufgenommen. Durch das Zusammenspiel der beiden Hubscheiben 241, 251 verändert sich der Abstand zwischen dem Schneckenrad 23 und dem Mantelrohr 5. In dem Übergang zur Fixierstellung wird der Abstand vergrößert, indem die beiden Hubscheiben 241, 251 auseinander gedreht werden und sich somit die Tiefe der beiden Bauteile vergrößert, so dass die zweite Nockenscheibe 251 aus der Ausnehmung 30 des Gehäuses 26 heraus gedrückt wird und die Wälzkörper 311 die Rampe der Laufbahn 312 heraufrollen und sich dabei an der Seitenwange 19 des Halteteils 8 abstützt und dadurch das Stützlager 17 gegen die gegenüberliegende Seitenwange 20 des Halteteils 8 zieht. Die Fixiervorrichtung ist nun so verspannt, dass die Seitenwangen 19, 20 des Halteteils 8 zusammengezogen sind, wodurch eine reibschlüssige Verspannung der Seitenwangen 19, 20 des Halteteils 8 mit den Seitenflächen der Führungsklammer 6 und wiederum mit den Seitenflächen des Mantelrohrs 5 erfolgt. Bei dem Übergang in die Freigabestellung wird die erste Hubscheibe 24 gegenüber der zweiten Nockenscheibe 25 verdreht, bis die Wälzkörper 311 die Rampe der Laufbahn 312 heruntergerollt sind. Dadurch verschiebt sich die zweite Hubscheibe 25 im Gehäuse 26 axial in Richtung des Schneckenrades 23 und des Stützlagers 17. Die Verspannung der Fixiervorrichtung 13 ist somit gelöst und die Lenksäule 1 ist zur Verstellung freigegeben. Ein solcher Hubmechanismus 16 mit den Hubscheiben 241, 251 und den Wälzkörpern 311 ist beispielsweise aus der deutschen Offenlegungsschrift DE 10 2008 029 247 A1 bekannt.

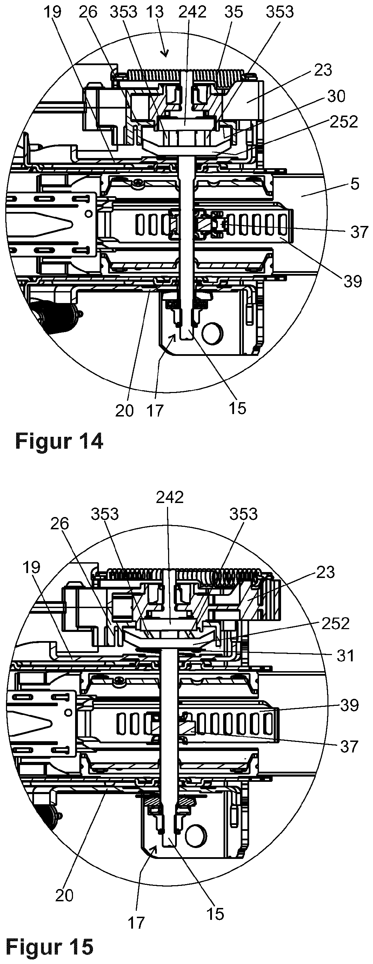

Die Funktionsweise der Fixiervorrichtung 13 mit einem Hubmechanismus 16 in einer zweiten Ausführungsform ist in den Figuren 14 und 15 in Form eines Längsschnitts veranschaulicht. Dabei handelt es sich in den Figuren 14 und 15 um eine vereinfachte schematische Darstellung, um die Übersichtlichkeit zu erhöhen. Die restliche Lenksäule weist eine identische Struktur wie die Lenksäule 1 aus den Figuren 1 bis 11 auf. Durch die Drehung des Spannbolzens 15 wird eine damit drehfest verbundene erste Hubscheibe 242 gegenüber einer zweiten Hubscheibe 252 verdreht, wobei zwischen den Hubscheiben 242, 252 zwei Stifte 353, auch Kippstifte genannt, angeordnet sind, die sich in Taschen der jeweiligen Hubscheibe 242, 252 abstützen. Durch das Zusammenspiel der beiden Hubscheiben 242, 252 verändert sich der Abstand zwischen dem Schneckenrad 23 und dem Mantelrohr 5. In dem Übergang zur Fixierstellung wird der Abstand vergrößert, in dem die beiden Hubscheiben 242, 252 zueinander verdreht werden und dadurch die Stifte 353 von einer geneigten Stellung in eine Streckstellung überführt werden. Auf diese Weise wird der zur Fixierung erforderliche Hub bereitgestellt. Ein solcher Hubmechanismus 16 mit den Hubscheiben 242, 252 und den Stiften 353 ist beispielsweise aus der EP 0 606 085 B1 bekannt.

Die erfindungsgemäße verstellbare Lenksäule 1 weist eine elektro-mechanische Fixiervorrichtung 13 mit einer besonders kompakten Bauweise auf. Das Gehäuse 26, 27 der Fixiervorrichtung 13 ist dabei schwimmend auf der zweiten Nockenscheibe 25 gelagert und kann sich in Axialrichtung des Spannbolzens 15 bewegen. Eine zusätzliche Befestigung des Gehäuses 26, 27 an der Karosserie ist somit nicht notwendig.

## Patentansprüche

1. Lenksäule (1) für ein Kraftfahrzeug, die zumindest in ihrer Längsrichtung (12) oder in ihre Höhenrichtung (11) verstellbar ist, umfassend
- ein Mantelrohr (5), das eine Lenkspindel (2) drehbar lagert,
- ein Halteteil (8), das mit der Karosserie des Kraftfahrzeugs verbindbar ist und zwei Seitenwangen (19, 20) aufweist, zwischen denen das Mantelrohr (5) angeordnet ist,
- eine elektro-mechanische Fixiervorrichtung (13), in deren Freigabestellung das Mantelrohr (5) gegenüber dem Halteteil (8) wenigstens in Längsrichtung (12) oder in Höhenrichtung (11) der Lenksäule (1) verstellbar ist und in deren Fixierstellung die eingestellte Position des Mantelrohrs (5) gegenüber dem Halteteil (8) festgestellt ist, wobei die Fixiervorrichtung (13)
• einen Spannbolzen (15), der die Seitenwangen (19, 20) des Halteteils (8) durchsetzt und beim Öffnen und Schließen der Fixiervorrichtung (13) mittels eines in einem Gehäuse (26, 27) angeordneten Elektromotors (18) um seine Achse drehbar ist, und
• einen Hubmechanismus (16) sowie ein Stützlager (17) umfasst, wobei die Seitenwangen (19, 20) des Halteteils (8) und das Mantelrohr (5) zwischen dem Hubmechanismus (16) und dem Stützlager (17) angeordnet sind, **dadurch gekennzeichnet, dass**
der Hubmechanismus (16) zwei Hubscheiben (24, 241, 242, 25, 251, 252) aufweist, wobei eine erste Hubscheibe (24, 241, 242) drehfest mit dem Spannbolzen (15) verbunden ist und eine zweite Hubscheibe (25, 251, 252) auf dem Spannbolzen (15) axial verschieblich in dem Gehäuse (26, 27) geführt ist, und wobei das Gehäuse (26, 27) schwimmend auf der zweiten Hubscheibe (25, 251, 252) gelagert ist, wobei zur Anbindung der Fixiervorrichtung (13) an die Lenksäule (1) keine zusätzlichen Befestigungspunkte vorgesehen sind.

2. Lenksäule nach Anspruch 1, **dadurch gekennzeichnet, dass** eine Führungsklammer (6) vorgesehen ist, die zwischen dem Halteteil (8) und dem Mantelrohr (5) angeordnet ist und die das Mantelrohr (5) in der Längsrichtung (12) führt.

3. Lenksäule nach Anspruch 2, **dadurch gekennzeichnet, dass** die Führungsklammer (6) um eine Schwenkachse (7) in dem Halteteil (8) schwenkbar gelagert ist.

4. Lenksäule nach einem der vorhergehenden Ansprüche, **dadurch gekennzeichnet, dass** eine Rotorwelle (21) des Elektromotors (18) mit einer Schnecke (22) drehfest verbunden ist, wobei die Schnecke (22) mit einem Schneckenrad (23) kämmt, das drehfest mit der ersten Hubscheibe (24, 241, 242) verbunden ist.

5. Lenksäule nach einem der vorhergehenden Ansprüche, **dadurch gekennzeichnet, dass** die beiden Hubscheiben (24, 25) als Hubgetriebe mit dem Stützlager (17) zur Bereitstellung eines Klemmhubs für die Fixierstellung der Fixiervorrichtung (13) zusammenwirken.

6. Lenksäule nach einem der Ansprüche 4 oder 5, **dadurch gekennzeichnet, dass** neben dem Elektromotor (18) auch das Getriebe in dem Gehäuse (26, 27) untergebracht ist und das Gehäuse (26, 27) an einer Seitenwange (19) des Halteteils (8) befestigt ist.

7. Lenksäule nach einem der vorhergehenden Ansprüche 4 bis 6, **dadurch gekennzeichnet, dass** zwischen dem Gehäuse (27) und dem Schneckenrad (23) eine Zugfeder (35) angeordnet ist, die als Schließhilfe für die Fixiervorrichtung (13) vorgesehen ist und die bei der Überführung der Fixiervorrichtung (13) in die Freigabestellung durch Drehung des Schneckenrades (23) vorspannbar ist.

8. Lenksäule nach einem der vorhergehenden Ansprüche, **dadurch gekennzeichnet, dass** mindestens ein zwischen den Seitenwangen (19, 20) des Halteteils (8) angeordneter und durch die Drehung des Spannbolzens (15) beim Öffnen und Schließen der Fixiervorrichtung (13) verstellbarer Feststellhaken (37) vorhanden ist, welcher in der Fixierstellung in ein Gegenfeststellteil (39) eingreift und welcher in der Freigabestellung vom Gegenfeststellteil (39) distanziert ist, wobei das Gegenfeststellteil (39) an einer parallel zur Achse des Spannbolzens (15) liegenden Wand des Mantelrohrs (8) angeordnet ist oder von dieser gebildet ist.

9. Lenksäule nach einem der vorhergehenden Ansprüche 3 bis 8, **dadurch gekennzeichnet, dass** zwischen der zweiten Hubscheibe (25, 251, 252) und der dazu nahen Seitenwange (19) des Halteteils (8) eine Fixierscheibe (31) angeordnet ist, die mit der zweiten Nockenscheibe (25, 251, 252) im Wesentlichen drehfest verbunden ist und die in der Fixierstellung der Fixiervorrichtung (13) im Zusammenspiel mit der Seitenwange (19) des Halteteils (8) eine Verschiebesicherung in Höhenrichtung (11) bildet.

10. Lenksäule nach einem der vorhergehenden Ansprüche, **dadurch gekennzeichnet, dass** die zweite Hubscheibe (25) einen kreisrunden Grundkörper mit zwei herausragenden Ansätzen (28) aufweist, wobei diese Ansätze (28) im Zusammenspiel mit der korrespondieren Ausnehmung (30) des Gehäuses (26) die axiale Führung der zweiten Nockenscheibe (25) bilden.

## Claims

1. Steering column (1) for a motor vehicle, which is adjustable in at least the longitudinal direction (12) thereof or in the vertical direction (11) thereof, comprising
- a casing tube (5), which rotatably supports a steering spindle (2),
- a holding part (8), which can be connected to the body of the motor vehicle and has two lateral cheeks (19, 20), between which the casing tube (5) is arranged,
- an electromechanical fixing device (13), in the release position of which the casing tube (5) can be adjusted relative to the holding part (8) at least in the longitudinal direction (12) or in the vertical direction (11) of the steering column (1) and in the fixing position of which the set position of the casing tube (5) is fixed relative to the holding part (8), wherein the fixing device (13) comprises
• a clamping bolt (15), which passes through the lateral cheeks (19, 20) of the holding part (8) and can be rotated about its axis by means of an electric motor (18) arranged in a housing (26, 27) as the fixing device (13) is opened and closed, and
• a stroke-generating mechanism (16) and a support bearing (17), wherein the lateral cheeks (19, 20) of the holding part (8) and the casing tube (5) are arranged between the stroke-generating mechanism (16) and the support bearing (17), **characterized in that**
the stroke-generating mechanism (16) has two stroke-generating disks (24, 241, 242, 25, 251, 252), wherein a first stroke-generating disk (24, 241, 242) is connected for conjoint rotation to the clamping bolt (15) and a second stroke-generating disk (25, 251, 252) is guided on the clamping bolt (15) in such a way as to be axially movable in the housing (26, 27), and wherein the housing (26, 27) is mounted in a floating manner on the second stroke-generating disk (25, 251, 252), wherein no additional fastening points are provided for attaching the fixing device (13) to the steering column (1).

2. Steering column according to Claim 1, **characterized in that** a guide clamp (6) is provided, which is arranged between the holding part (8) and the casing tube (5) and guides the casing tube (5) in the longitudinal direction (12).

3. Steering column according to Claim 2, **characterized in that** the guide clamp (6) is supported in the holding part (8) in such a way as to be pivotable about a pivoting axis (7).

4. Steering column according to one of the preceding claims, **characterized in that** a rotor shaft (21) of the electric motor (18) is connected for conjoint rotation to a worm (22), wherein the worm (22) meshes with a worm wheel (23), which is connected for conjoint rotation to the first stroke-generating disk (24, 241, 242).

5. Steering column according to one of the preceding claims, **characterized in that** the two stroke-generating disks (24, 25) interact as a stroke-generating gear with the support bearing (17) to provide a clamping stroke for the fixing position of the fixing device (13).

6. Steering column according to either of Claims 4 or 5, **characterized in that**, in addition to the electric motor (18), the gear is also accommodated in the housing (26, 27), and the housing (26, 27) is secured on a lateral cheek (19) of the holding part (8).

7. Steering column according to one of the preceding Claims 4 to 6, **characterized in that** a tension spring (35) is arranged between the housing (27) and the worm wheel (23), said tension spring being provided as a closing aid for the fixing device (13) and being pre-tensionable by rotation of the worm wheel (23) when the fixing device (13) is transferred to the release position.

8. Steering column according to one of the preceding claims, **characterized in that** there is at least one fixing hook (37) arranged between the lateral cheeks (19, 20) of the holding part (8) and adjustable by means of the rotation of the clamping bolt (15) as the fixing device (13) is opened and closed, said fixing hook (37) engaging in a mating fixing part (39) in the fixing position and being spaced apart from the mating fixing part (39) in the release position, wherein the mating fixing part (39) is arranged on or formed by a wall of the casing tube (8) which is parallel to the axis of the clamping bolt (15).

9. Steering column according to one of the preceding Claims 3 to 8, **characterized in that** a fixing disk (31) is arranged between the second stroke-generating disk (25, 251, 252) and the lateral cheek (19) of the holding part (8) which is close to said disk, the fixing disk (31) being connected substantially for conjoint rotation to the second cam disk (25, 251, 252) and forming a movement lock in the vertical direction (11) in conjunction with the lateral cheek (19) of the holding part (8) in the fixing position of the fixing device (13).

10. Steering column according to one of the preceding claims, **characterized in that** the second stroke-generating disk (25) has a circular main body with two projecting attachments (28), wherein these attachments (28) form the axial guide for the second cam disk (25) in conjunction with the corresponding recess (30) in the housing (26).

## Revendications

1. Colonne de direction (1) pour un véhicule automobile, laquelle est déplaçable au moins dans le sens de la longueur (12) ou dans le sens de la hauteur (11), comportant
- un tube enveloppe (5) qui supporte de manière rotative un arbre de direction (2),
- une partie de retenue (8) qui peut être reliée à la carrosserie du véhicule automobile et comprend deux joues latérales (19, 20) entre lesquelles le tube enveloppe (5) est disposé,
- un dispositif de fixation (13) électromécanique dans la position de libération duquel le tube enveloppe (5) est déplaçable par rapport à la partie de retenue (8) au moins dans le sens de la longueur (12) ou dans le sens de la hauteur (11) de la colonne de direction (1), et dans la position de fixation duquel la position réglée du tube enveloppe (5) par rapport à la partie de retenue (8) est fixée, le dispositif de fixation (13) comportant
- un boulon de serrage (15) qui traverse les joues latérales (19, 20) de la partie de retenue (8) et qui, lors de l'ouverture et de la fermeture du dispositif de fixation (13), peut être entraîné en rotation autour de son axe au moyen d'un moteur électrique (18) disposé dans un boîtier (26, 27), et
- un mécanisme de course (16) ainsi qu'un palier d'appui (17), les joues latérales (19, 20) de la partie de retenue (8) et le tube enveloppe (5) étant disposés entre le mécanisme de course (16) et le palier d'appui (17), **caractérisée en ce que**
le mécanisme de course (16) comprend deux disques de course (24, 241, 242, 25, 251, 252), un premier disque de course (24, 241, 242) étant relié de manière solidaire en rotation au boulon de serrage (15) et un deuxième disque de course (25, 251, 252) étant guidé sur le boulon de serrage (15) de manière axialement mobile dans le boîtier (26, 27), et le boîtier (26, 27) étant monté flottant sur le deuxième disque de course (25, 251, 252), aucun point de fixation supplémentaire n'étant prévu pour la connexion du dispositif de fixation (13) à la colonne de direction (1).

2. Colonne de direction selon la revendication 1, **caractérisée en ce qu'**un étrier de guidage (6) est prévu, lequel est disposé entre la partie de retenue (8) et le tube enveloppe (5) et lequel guide le tube enveloppe (5) dans le sens de la longueur (12).

3. Colonne de direction selon la revendication 2, **caractérisée en ce que** l'étrier de guidage (6) est monté de manière pivotante autour d'un axe de pivotement (7) dans la partie de retenue (8).

4. Colonne de direction selon l'une quelconque des revendications précédentes, **caractérisée en ce qu'**un arbre de rotor (21) du moteur électrique (18) est relié de manière solidaire en rotation à une vis sans fin (22), la vis sans fin (22) s'engrenant avec une roue hélicoïdale (23) qui est reliée de manière solidaire en rotation au premier disque de course (24, 241, 242).

5. Colonne de direction selon l'une quelconque des revendications précédentes, **caractérisée en ce que** les deux disques de course (24, 25) coopèrent, en tant que transmission de course, avec le palier d'appui (17) pour produire une course de serrage pour la position de fixation du dispositif de fixation (13).

6. Colonne de direction selon la revendication 4 ou 5, **caractérisée en ce qu'**en plus du moteur électrique (18), la transmission est également logée dans le boîtier (26, 27) et le boîtier (26, 27) est fixé à une joue latérale (19) de la partie de retenue (8).

7. Colonne de direction selon l'une quelconque des revendications précédentes 4 à 6, **caractérisée en ce qu'**un ressort de traction (35) est disposé entre le boîtier (27) et la roue hélicoïdale (23), lequel ressort de traction est destiné à assister la fermeture du dispositif de fixation (13) et lequel, lors du passage du dispositif de fixation (13) à la position de libération, peut être précontraint par la rotation de la roue hélicoïdale (23).

8. Colonne de direction selon l'une quelconque des revendications précédentes, **caractérisée en ce qu'**au moins un crochet de fixation (37) disposé entre les joues latérales (19, 20) de la partie de retenue (8) et déplaçable par la rotation du boulon de serrage (15) lors de l'ouverture et de la fermeture du dispositif de fixation (13) est prévu, lequel crochet de fixation vient en prise, dans la position de fixation, dans une partie de fixation homologue (39) et lequel est, dans la position de libération, espacé de la partie de fixation homologue (39), la partie de fixation homologue (39) étant disposée sur une paroi du tube enveloppe (8) située parallèlement à l'axe du boulon de serrage (15) ou étant formée par cette paroi.

9. Colonne de direction selon l'une quelconque des revendications précédentes 3 à 8, **caractérisée en ce qu'**un disque de fixation (31) est disposé entre le deuxième disque de course (25, 251, 252) et la joue latérale (19), proche de celui-ci, de la partie de retenue (8), lequel disque de fixation est relié de manière sensiblement solidaire en rotation au deuxième disque à cames (25, 251, 252) et lequel disque de fixation forme, dans la position de fixation du dispositif de fixation (13) et en coopération avec la joue latérale (19) de la partie de retenue (8), un blocage antidéplacement dans le sens de la hauteur (11).

10. Colonne de direction selon l'une quelconque des revendications précédentes, **caractérisée en ce que** le deuxième disque de course (25) comprend un corps de base circulaire doté de deux rallonges saillantes (28), ces rallonges (28) formant, en coopération avec l'évidement (30) correspondant du boîtier (26), le guidage axial du deuxième disque à cames (25).
